# EUROPÄISCHE PATENTSCHRIFT

(11) **EP 2 451 621 B1**
(45) Veröffentlichungstag und Bekanntmachung des Hinweises auf die Patenterteilung: **29.05.2013**
(21) Anmeldenummer: 10732690.2
(22) Anmeldetag: 06.07.2010
(51) Int. Cl.: B29B 15/12, B29C 70/52, C08J 5/24, B29C 67/24

(54) **VERFAHREN ZUR HERSTELLUNG VON FASERVERSTÄRKTEN VERBUNDWERKSTOFFEN AUS POLYAMID 6 UND COPOLYAMIDEN AUS POLYAMID 6 UND POLYAMID 12**
METHOD FOR PRODUCING FIBER-REINFORCED COMPOSITE MATERIALS FROM POLYAMIDE 6 AND COPOLYAMIDES MADE OF POLYAMIDE 6 AND POLYAMIDE 12
PROCÉDÉ DE PRODUCTION DE MATÉRIAUX COMPOSITES RENFORCÉS PAR DES FIBRES EN POLYAMIDE 6 ET COPOLYAMIDES DE POLYAMIDE 6 ET POLYAMIDE 12

(30) Priorität: 08.07.2009 EP 09164863
(43) Veröffentlichungstag der Anmeldung: 16.05.2012
(73) Patentinhaber: BASF SE, 67056 Ludwigshafen (DE)
(72) Erfinder: SCHERZER, Dietrich, 67433 Neustadt (DE); KORY, Gad, 69251 Gaiberg (DE); WEBER, Martin, 67487 Maikammer (DE)
(86) Internationale Anmeldenummer: PCT/EP2010/059628
(87) Internationale Veröffentlichungsnummer: WO 2011/003900

(56) Entgegenhaltungen:
- EP-A1- 0 752 306
- EP-A2- 0 384 063
- DE-A1-102007 031 467
- US-A- 5 098 496
- US-A- 5 424 388
- LUISIER A ET AL: "Reaction injection pultrusion of PA12 composites: process and modelling", COMPOSITES PART A: APPLIED SCIENCE AND MANUFACTURING, ELSEVIER SCIENCE PUBLISHERS B.V., AMSTERDAM, NL, Bd. 34, Nr. 7, 1. Juli 2003 (2003-07-01), Seiten 583-595, XP004428285, ISSN: 1359-835X, DOI: DOI:10.1016/S1359-835X(03)00101-5

## Beschreibung

Die vorliegende Erfindung betrifft ein Verfahren zur Herstellung eines faserverstärkten Verbundwerkstoffs aus Polyamid 6 und Copolyamiden aus Polyamid 6 und Polyamid 12.

Aus EP-A-56 703 und EP-A-579 047 sind bereits Bauteile bzw. Granulate aus einem faserverstärkten Thermoplasten und deren Herstellung durch Strangziehen (Pultrusion) bekannt, bei dem ein Faserstrang mit einem aufgeschmolzenen Kunststoff benetzt wird.

Aus der DE-A-1 0 2007 031 467 ist ein Verfahren zur Herstellung eines faserverstärkten Verbundstoffs bekannt, bei dem eine Vielzahl von Endlosfäden durch ein Bad enthaltend Caprolactam und andere Ausgangsstoffe für Polyamid 6 hindurchgeleitet und benetzt werden, die benetzten Endlosfäden in einen Ofen eingebracht werden, in dem Caprolactam anionisch bei 230°C zu an den Endlosfäden anhaftendem Polyamid 6 polymerisiert wird.

Nachteilig an dem zuvor genannten Verfahren ist, dass die Faserbenetzung zu wünschen übrig lässt und der Gehalt an Restmonomeren und Oligomeren hoch ist.

Die EP 0384 063 A2 offenbart ein Verfahren zur Herstellung von faserverstärkten Verbundwerkstoffen wobei man eine Vielzahl von Endlosfäden oder Gewebe gegebenenfalls gemeinsam mit Verstärkungsmaterialien, enthaltend Caprolactam und andere Ausgangsstoffe für Polyamid 6 oder andere Copolyamide, tränkt, bei Temperaturen von 70 bis 100°C hindurchgeleitet und bei Temperaturen von 100 bis 190°C anionisch polymerisiert.

Es wurde ein verbessertes Verfahren zur Herstellung von faserverstärkten Verbundwerkstoffen gefunden, welches dadurch gekennzeichnet ist, dass man eine Vielzahl von Endlosfäden oder Gewebe gegebenenfalls gemeinsam mit Verstärkungsmaterialien, enthaltend Caprolactam und andere Ausgangsstoffe für Polyamid 6 oder andere Copolyamide, tränkt, über der Schmelztemperatur des Systems bei Temperaturen von 70 bis 100°C hindurchgeleitet und bei Temperaturen unter der Schmelztemperatur des Systems unter 70°C als Halbzeuge als Platten oder aufgewickelt abkühlt. Diese Halbzeuge lassen sich später in einer Pressform oder in einem anderen geeigneten Werkzeug bei Temperaturen von 100 bis 190°C anionisch polymerisieren und gegebenenfalls bei Temperaturen von 90 bis 170°C nachpolymerisieren.

Das erfindungsgemäße Verfahren kann wie folgt durchgeführt werden:

Das erfindungsgemäße Verfahren kann sowohl als offenes als auch als geschlossenes Verfahren, bevorzugt als offenes Verfahren durchgeführt werden.

Beim offenen Verfahren können die Fasern oder Gewebe, gegebenenfalls mit Verstärkungsmaterial, über eine Tauchwalze von ihren Stelllagen (mit Faserspindeln) durch ein Bad oder in eine Tränkwanne geführt werden. Gegebenenfalls können Kadiergitter für die gewünschte Verteilung der Fasern im späteren Verbundwerkstoff sorgen. In diesem Falle könnte gegebenenfalls das Verstärkungsmaterial nach dem Kadiergitter eingebracht werden. Die Fasern, gegebenenfalls mit Verstärkungsmaterial, können in einer Tränkwanne bei Temperaturen unterhalb der Polymerisationstemperatur und über dem Schmelzpunkt des Gemisches, also bei Temperaturen von 70 bis 100°C, bevorzugt 70 bis 95°C, besonders bevorzugt 70 bis 90°C mit einer Mischung aus Caprolactam und andere Ausgangsstoffe für Polyamid 6 getränkt, bei Temperaturen von 100 bis 190°C, bevorzugt 100 bis 160°C, besonders bevorzugt 100 bis 150°C, insbesondere 100 bis 130°C anionisch polymerisiert und gegebenenfalls bei Temperaturen von 100 bis 170°C, bevorzugt 100 bis 160°C, besonders bevorzugt 100 bis 150°C, insbesondere 100 bis 130°C nachpolymerisiert und kann danach mehrere Vorformstationen durchlaufen, die das Faserharzgemisch immer näher an die gewünschte, endgültige Form heranführen.

Nach dem Tränken mit einer Mischung aus Caprolactam und andere Ausgangsstoffe für Polyamid 6 oder andere Copolyamide treten beim geschlossenen Verfahren die gesamten Fasern oder Gewebe, gegebenenfalls mit Verstärkungsmaterial im formgebenden Werkzeug dann allerdings mit erhöhtem Druck von 1,1 bis 800 bar, bevorzugt 1,5 bis 10 bar, insbesondere 2 bis 5 bar - z.B. in einer Tränkwanne oder einem Bad bei Temperaturen von 70 bis 100°C in Kontakt, werden bei Temperaturen von 100 bis 190°C, bevorzugt 100 bis 160°C, besonders bevorzugt 100 bis 150°C, insbesondere 100 bis 130°C anionisch polymerisiert und gegebenenfalls bei Temperaturen von 100 bis 170°C, bevorzugt 100 bis 160°C, besonders bevorzugt 100 bis 150°C, insbesondere 100 bis 130°C nachpolymerisiert und können danach mehrere Vorformstationen durchlaufen, die das Faserharzgemisch immer näher an die gewünschte, endgültige Form heranführen.

Bei großvolumigen Verbundwerkstoffen ist auf eine möglichst konstante Wärmeverteilung zu achten, um Rissen vorzubeugen. Der so ausgehärtete Verbundwerkstoff kann anschließend in beliebige Teile zersägt werden.

Der gesamte Prozess wird durch ein Ziehwerkzeug z. B. in Form eines Raupenabzugs oder Aufwickeln oder von reversierenden hydraulischen Greifern in Gang gehalten, welches den fertigen Verbundwerkstoff bzw. Halbzeug und somit die Fasern mitsamt des Kunststoffes und gegebenenfalls dem Verstärkungsmaterial aus dem Härtungswerkzeug herauszieht.

Der mit Polyamid benetzte Endlosstrang kann danach aufgewickelt werden oder auf die gewünschte Länge geschnitten bzw. granuliert werden.

Als Caprolactam eignet sich bevorzugt ε-Caprolactam.

Bis zu 20 Gew.-%, also 0 bis 20 Gew.-%, bevorzugt 0 bis 17 Gew.-%, besonders bevorzugt 0 bis 15 Gew.-% des Caprolactams können durch Co-Monomere aus der Gruppe der Lactame mit mindestens 4 C-Atomen verwendet werden, besonders bevorzugt ist ω-Lauryllactam.

In einer bevorzugten Ausführungsform können Mischungen aus ε-Caprolactam und ω-Lauryllactam eingesetzt werden. Das Mischungsverhältnis beträgt in der Regel 1000 : 1, bevorzugt 100 : 1, besonders bevorzugt 10 : 1, insbesondere 2 : 1.

Als andere Ausgangsstoffe für Polyamid 6 eignen sich Aktivatoren, die durch Umsetzung von Isocyanaten, beispielsweise HDI (Hexamethylendiisocyanat) mit Lactamen, beispielweise ε-Caprolactam, hergestellt werden können und blockierte Isocyanate, Isophthaloylbiscaprolactam, Terephthaloylbiscaprolactam, Ester wie Dimethylphthalatpolyethylenglykol, Polyole oder Polydiene in Kombination mit Säurechloriden, Carbonylbiscaprolactam, Hexamethylendiisocyanat oder Acyllactamat, bevorzugt Isocyanate, Hexamethylendiisocyanat oder Acyllactamat, besonders bevorzugt Hexamethylendiisocyanat oder Acyllactamat und alkalische Katalysatoren wie Magnesiumhalogenlactamate, Alkalicaprolactamate, Aluminium- oder Magnesiumlactam, Natrium-Caprolactamat oder Magnesium-Bromidlactamat, bevorzugt Alkalicaprolactamate, Aluminium- oder Magnesiumlactam, Natrium-Caprolactamat oder Magnesium-Bromidlactamat, besonders bevorzugt Natrium-Caprolactam oder Magnesium-Bromidlactamat.

Als Aktivatoren können alle Aktivatoren, die für die aktivierte anionische Polymerisation verwendet werden, eingesetzt werden, so z.B. N-Acyllactame, wie N-Acetylcaprolactam, substituierte Triazine, Carbodimide, Cyanamide, Mono- und Polyisocyanate und die entsprechenden maskierten Isocyanatverbindungen. Die Aktivatoren werden vorzugsweise in Konzentrationen von 0,1 bis 1 Mol.-%, bezogen auf die Lactammenge, verwendet. Mit den erfindungsgemäßen Katalysatoren können Lactame mit mindestens 5 Ringgliedern, wie z.B. Caprolactam, Laurinlactarn, Capryllactam, Önanthlactam die entsprechenden C-substituierten Lactame oder Gemische der genannten Lactame polymerisiert werden.

Die alkalischen Katalysatoren können hergestellt werden durch Umsetzung des Polyethers mit der entsprechenden Alkali- bzw. Erdalkaliverbindung, wie z. B. dem Alkoholat, Amid, Hydrid, Grignard-Verbindungen sowie den Alkali- bzw. Erdalkalimetallen. Die Katalysatoren werden in der Regel in Mengen von 0,1 bis 40 Gew.-%, bevorzugt 0,2 bis 15 Gew.-%, bezogen auf die Lactamschmelze, zugesetzt.

Gut geeignete Katalysatoren für die Polymerisation sind Kalium- oder Natrium-Lactamate. Besonders gut geeignet ist Natrium-Caprolactamat, das einfach aus NaH und ε-Caprolactam hergestellt werden kann.

Das Mischungsverhältnis von Caprolactam, Aktivator und alkalischen Katalysator kann in weiten Grenzen variiert werden, in der Regel beträgt das Molverhältnis von Caprolactam zu Aktivator zu alkalischem Katalysator 1000:1:1 bis 1000 : 200: 50.

Als Fasern eignen sich anorganische Materialien wie Hochmodulcarbonfasern, silikatische und nicht silikatische Gläser der verschiedensten Art, Kohlenstoff, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle, Cellulose und andere Naturfasern beispielweise Flachs, Sisal, Kenaf, Hanf, Abaca, bevorzugt hochschmelzende Materialien, beispielsweise Gläser, Kohlenstoff, Aramide, Liquid-crystal-Polymere, Polyphenylensulfide, Polyetherketone, Polyetheretherketone und Polyetherimide, besonders bevorzugt Glas-, Kohlenstoff-, Aramid-, Stahl-, Keramik- und/oder sonstige hinreichend temperaturbeständige polymere Fasern oder Fäden.

Als Verstärkungsmaterial eignet sich Rovings der zuvor genannten Fasern, bevorzugt nicht lineare und lineare, besonders bevorzugt lineare Formkörper wie Fasern, Garne, Zwirne, Seile und textile Gebilde, wie Gewebe, Gewirke, Gestricke, Geflechte und Vliese, bevorzugt Fasern, Garne und Gewebe, besonders bevorzugt Fasern und Garne.

Der Gehalt an Fasern im fertigen Verbundwerkstoff beträgt im Allgemeinen 20 bis 85 Vol.-%, bevorzugt 40 bis 70 Vol.-%, bei Profilen mit rein unidirektionaler Verstärkung bei 30 bis 90 Vol.-%, bevorzugt 40 bis 80 Vol.-%.

Das Verstärkungsmaterial kann auf verschiedene Weise in die Tränkwanne eingeführt werden. Beispielsweise kann es durch eine Düse mit engem Spiel eingezogen werden. Bevorzugt wird das Verstärkungsmaterial durch einen Spalt ohne Wandberührung in den Schmelzeraum eingeführt.

Das Verstärkungsmaterial kann in dem erfindungsgemäßen Verbundwerkstoff gleichmäßig verteilt sein, es kann jedoch auch in bestimmten Teilen des Verbundwerkstoff, z.B. in den Randbereichen und/oder besonderen Verstärkungszonen, in einem größeren Anteil vorhanden sein als in anderen Teilen des Verbundwerkstoffes.

Die geometrische Form und die Abmessungen der Düse können in weiten Grenzen variiert werden, so dass Verbundwerkstoffe (Profile, Platten oder Bänder) mit verschiedenen Formen und Abmessungen hergestellt werden können. Bevorzugt sind Bandprofile mit Durchmessern bis 500 mm, insbesondere 200 mm, und Rechteckprofile und Rundprofile mit Breiten bis zu 2500 mm und Dicken bis zu 10 mm. Besonders bevorzugt sind dünne Bänder mit Dicken bis zu 1 mm.

Auch gekrümmte Profile oder sich in ihrer Form ändernde Profile (wie z. B. Hammerstiele) können durch Spezialverfahren hergestellt werden.

Unter dem Begriff Verbundwerkstoff werden Werkstoffe aus zwei oder mehr verbundenen Materialien verstanden wie Teilchenverbundwerkstoffe (Dispersionswerkstoffe, Faserverbundwerkstoffe, Schichtverbundwerkstoffe (Laminate) und Durchdringungsverbundwerkstoffe, bevorzugt Faserverbundwerkstoffe und Schichtverbundwerkstoffe (Laminate), besonders bevorzugt Faserverbundwerkstoffe.

Unter dem Begriff Strangziehen (Pultrusion) versteht man eine Methode zur Herstellung von Verbundwerkstoffen wie faserverstärkte Kunststoffe in Form von Profilen in einem diskontinuierlichen oder kontinuierlichen, bevorzugt kontinuierlichen Ablauf.

Die Formen der Profile sind vielfältig wie Matten, Platten, Rohre, Träger wie T- und Doppel-T-Träger, U-, W- und UW-Profile, Formstücke z.B. für die Automobilindustrie, für Gehäuse, Griffe und Stiele für Werkzeug und Sportgeräte wie Paddel oder Tennisschläger.

Faserverstärkte Verbundwerkstoffe, insbesondere faserverstärkte Polyamide werden für viele Anwendungen, u.a. für faser- oder gewebeverstärkte Kunststoffgranulate, Profile oder Platten, sowie in Spritzgussteilen für die Automobilindustrie und anderen Industrien verwendet. Die Fasern werden mit dem Ziel in der Kunststoffmatrix eingesetzt, die mechanischen Eigenschaften, wie Festigkeit, Steifigkeit und Schlagzähigkeit zu verbessern. Die erreichbaren Eigenschaften hängen stark von der Faserbeschaffenheit und Faserlänge im Bauteil, wie auch der Dispergiergüte der Fasern in der Kunststoffmatrix ab. Im Hinblick auf die mechanischen Eigenschaften ist die Verwendung langer und ausgerichteter Fasern, insbesondere Glasfasern und Kohlenstoff-Fasern, zu bevorzugen.

### Beispiele

Beispiel 1 (Versuche mit zwei Temperaturstufen) 30 g (265 mmol) ε-Caprolactam wurden unter Stickstoffatmosphäre aufgeschmolzen, bei einer Temperatur T1 (VZ1) unter Durchleiten von Stickstoff gerührt. Anschließend auf Temperatur T2 aufgeheizt, 1,8 g (13,25 mmol = 5 Mol-%) Natrium-Caprolactamat (20 Gew.-%-ig in Caprolactam) (als Katalysator) und unter starkem Rühren 0,376 ml (2,42 mmol = 0,9 Mol-%) N-Acetylcaprolactam (als Aktivator) zugesetzt und gemäß der Tabelle bei VZ2 nachgerührt. Das erhaltene Polyamid wurde beurteilt, entformt, zerkleinert und analytisch untersucht.

Nachfolgend sind die Ergebnisse in Tabelle 1 zusammengestellt.

**Tabelle 1**

| Beispiel | T1 °C] | T2 °C] | Verweilzeit [min] | | Monomer [%] | Dimer [%] | Trimer [%] | Qualität des Formteils |
|---|---|---|---|---|---|---|---|---|
| | | | vz1 | vz2 | | | | |
| 1a | 90 | 138 | 10 | 2 | 2,1 | 0,56 | 0,14 | gut |
| 1b | 81 | 145 | 10 | 1 | 2,7 | 0,57 | 0,14 | gut |
| Vgl. 1c | 105 | 200 | 10 | <1 | 4,5 | 0,6 | 0,16 | schlecht |

### Beispiel 2 (Versuche mit drei Temperaturstufen)

30 g (265 mmol) ε-Caprolactam wurden unter Stickstoffatmosphäre aufgeschmolzen, bei einer Temperatur T1 (VZ1) unter Durchleiten von Stickstoff gerührt, bei einer Temperatur T2 1,8 g (13,25 mmol = 5 Mol-%) Natrium-Caprolactamat (20 Gew.-%-ig in Caprolactam) und unter starkem Rühren 0,376 ml (2,42 mmol = 0,9 Mol-%) N-Acetylcaprolactam zugesetzt und gemäß der Tabelle bei VZ2 nachgerührt. Das erhaltene Polyamid wurde die Zeit VZ3 bei einer Temperatur T3 getempert und anschließend ausgebaut, beurteilt, zerkleinert und analytisch untersucht.

Nachfolgend sind die Ergebnisse in Tabelle 2 zusammengestellt.

**Tabelle 2**

| Beispiel | T1 [°C] | T2 [°C] | T3 [°C] | Verweilzeit [min] | | | Monomer [%] | Dimer [%] | Trimer [%] | Qualität des Formteils |
|---|---|---|---|---|---|---|---|---|---|---|
| | | | | vz 1 | vz2 | vz3 | | | | |
| 2a | 90 | 138 | 110 | 10 | 2 | 20 | 1,9 | 0,55 | 0,14 | gut |
| 2b | 81 | 145 | 130 | 10 | 1 | 20 | 2,6 | 0,56 | 0,14 | gut |
| Vgl. 2c | 90 | 200 | 140 | 10 | 1 | 20 | 4,3 | 0,6 | 0,16 | schlecht |

### Beispiel 3 (Versuche zur Pultrusion)

Unter Schutzgas N2 (trockener Stickstoff) wurden in einer beheizte Metallwanne bei einer Temperatur von 85°C und einem Druck von 1 bar (Schutzgas) Kohlenstoff- Glas- oder Naturfasergewebe langsam während einer Minute durch aufgeschmolzenes Caprolactam, das 5 Mol-% Natrium-Caprolactamat und 1 Mol-% N-Acetylcaprolactam enthielt, gezogen. Nach dem einminütigen Tränken wurde das imprägnierte Gewebe in einen Trockenschrank mit der Temperatur T4 eingebracht und dort für 3 Minuten belassen. Das ausgetrocknete Gewebebündel wurde dann in einem zweiten Trockenschrank bei T5 für 20 Minuten nachgetempert.

Nachfolgend sind die Ergebnisse in Tabelle 3 zusammengestellt.

| Beispiel | T4 [°C] | T5 [°C] | Gewebe | Aussehen | Restmonomer [Gew.-%] |
|---|---|---|---|---|---|
| 3a | 150 | 120 | Flachsschnur | Gut | 2,7 |
| 3b | 150 | 120 | Glasfasermatte* | Gut | 2,65 |
| Vgl. 3c | 190 | 120 | Glasfasermatte* | Verfärbt, schlecht getränkt | 3,6 |
| Vgl. 3d | 200 | 120 | Kohlenstofffasermatte | Schlecht getränkt | |
| 3e | 130 | 120 | Kohlenstofffasermatte | Gut | 2,5 |

| | | | | | |
|---|---|---|---|---|---|
| * Schlichte wurde durch Beflammen entfernt | | | | | |

## Patentansprüche

1. Verfahren zur Herstellung von faserverstärkten Verbundwerkstoffen, **dadurch gekennzeichnet, dass** man eine Vielzahl von Endlosfäden oder Gewebe gegebenenfalls gemeinsam mit Verstärkungsmaterialien, enthaltend Caprolactam und andere Ausgangsstoffe für Polyamid 6, tränkt, bei Temperaturen von 70 bis 100°C hindurchgeleitet und danach als Halbzeug unter der Schmelztemperatur von 70°C abkühlt, anschließend bei Temperaturen von 100 bis 190°C anionisch polymerisiert und gegebenenfalls bei Temperaturen von 90 bis 170°C nachpolymerisiert.

2. Verfahren zur Herstellung eines faserverstärkten Verbundwerkstoffes nach Anspruche 1, **dadurch gekennzeichnet, dass** man Endlosfäden aus Glas-, Kohlenstoff-, Aramid-, Stahl-, Keramik- und/oder sonstige hinreichend temperaturbeständige polymere Fasern oder Fäden einsetzt.

3. Verfahren zur Herstellung eines faserverstärkten Verbundwerkstoffes nach einem der Ansprüche 1 oder 2, **dadurch gekennzeichnet, dass** man bei Temperaturen von 100 bis 160°C anionisch polymerisiert.

4. Verfahren zur Herstellung eines faserverstärkten Verbundwerkstoffes nach einem der Ansprüche 1 bis 3, **dadurch gekennzeichnet, dass** man bei Temperaturen von 100 bis 160°C nachpolymerisiert.

5. Verfahren zur Herstellung eines faserverstärkten Verbundwerkstoffes nach einem der Ansprüche 1 bis 4, **dadurch gekennzeichnet, dass** die Endlosfäden als Faserstrang durch das Bad hindurchgeleitet werden.

6. Verfahren zur Herstellung eines faserverstärkten Verbundwerkstoffes nach einem der Ansprüche 1 bis 5, **dadurch gekennzeichnet, dass** das bis zu 20 Gew.-% des Caprolactams durch Co-Monomere ersetzt wurden.

7. Verfahren zur Herstellung eines faserverstärkten Verbundwerkstoffes nach einem der Ansprüche 1 bis 6, **dadurch gekennzeichnet, dass** man Mischungen aus ε-Caprolactam und ε-Lauryllactam einsetzt.

8. Verfahren zur Herstellung eines faserverstärkten Verbundwerkstoffes nach einem der Ansprüche 1 bis 7, **dadurch gekennzeichnet, dass** man die Tränkung der Fäden oder Gewebe bei einer Temperatur von 70 bis 100°C durchführt.

## Claims

1. A method for producing fiber-reinforced composite materials, wherein a multiplicity of continuous filaments or woven fabric is impregnated optionally together with reinforcing materials, comprising caprolactam and other starting materials for polyamide 6, passed through at temperatures of 70 to 100°C, and thereafter, as a prepreg, cooled below the melting temperature of 70°C, subsequently anionically polymerized at temperatures of 100 to 190°C, and optionally repolymerized at temperatures of 90 to 170°C.

2. The method for producing a fiber-reinforced composite material according to claim 1, wherein continuous filaments of glass, carbon, aramid, steel, ceramic and/or other sufficiently temperature-resistant polymeric fibers or filaments are used.

3. The method for producing a fiber-reinforced composite material according to either of claims 1 and 2, wherein anionic polymerization takes place at temperatures of 100 to 160°C.

4. The method for producing a fiber-reinforced composite material according to any of claims 1 to 3, wherein repolymerization takes place at temperatures of 100 to 160°C.

5. The method for producing a fiber-reinforced composite material according to any of claims 1 to 4, wherein the continuous filaments are passed as a strand of fibers through the bath.

6. The method for producing a fiber-reinforced composite material according to any of claims 1 to 5, wherein up to 20% by weight of the caprolactam has been replaced by comonomers.

7. The method for producing a fiber-reinforced composite material according to any of claims 1 to 6, wherein mixtures of ε-caprolactam and ε-laurolactam are used.

8. The method for producing a fiber-reinforced composite material according to any of claims 1 to 7, wherein the impregnation of the filaments or woven fabric is carried out at a temperature of 70 to 100°C.

## Revendications

1. Procédé pour la production de matériaux composites renforcés avec des fibres, **caractérisé en ce qu'**on imprègne une multiplicité de fils continus ou un tissu éventuellement ensemble avec des matériaux de renfort, contenant du caprolactame et d'autres produits de départ pour polyamide 6, on les fait passer à des températures de 70 à 100 °C et ensuite en tant que produit semi-fini on les refroidit jusqu'au-dessous de la température de fusion de 70 °C, ensuite on les soumet à une polymérisation anionique à des températures de 100 à 190 °C et éventuellement à une post-polymérisation à des températures de 90 à 170 °C.

2. Procédé pour la production d'un matériau composite renforcé avec des fibres selon la revendication 1, **caractérisé en ce qu'**on utilise des fils continus de verre, de carbone, d'aramide, d'acier, de céramique et/ou d'autres fils ou fibres polymères suffisamment résistants à la température.

3. Procédé pour la production d'un matériau composite renforcé avec des fibres selon la revendication 1 ou 2, **caractérisé en ce qu'**on effectue la polymérisation anionique à des températures de 100 à 160 °C.

4. Procédé pour la production d'un matériau composite renforcé avec des fibres selon l'une quelconque des revendications 1 à 3, **caractérisé en ce qu'**on effectue la post-polymérisation à des températures de 100 à 160 °C.

5. Procédé pour la production d'un matériau composite renforcé avec des fibres selon l'une quelconque des revendications 1 à 4, **caractérisé en ce qu'**on fait passer dans le bain les fils continus sous forme d'écheveau de fibres.

6. Procédé pour la production d'un matériau composite renforcé avec des fibres selon l'une quelconque des revendications 1 à 5, **caractérisé en ce que** jusqu'à 20 % en poids du caprolactame ont été remplacés par des comonomères.

7. Procédé pour la production d'un matériau composite renforcé avec des fibres selon l'une quelconque des revendications 1 à 6, **caractérisé en ce qu'**on utilise des mélanges d'ε-caprolactame et ε-lauryl-lactame.

8. Procédé pour la production d'un matériau composite renforcé avec des fibres selon l'une quelconque des revendications 1 à 7, **caractérisé en ce qu'**on effectue l'imprégnation des fibres ou du tissu à une température de 70 à 100 °C.
